# EUROPÄISCHE PATENTSCHRIFT

(11) **EP 0 731 591 B1**
(45) Veröffentlichungstag und Bekanntmachung des Hinweises auf die Patenterteilung: **28.05.2003**
(21) Anmeldenummer: 96103211.7
(22) Anmeldetag: 01.03.1996
(51) Int. Cl.: H04M 3/40, H04M 3/00, H04M 3/54, H04M 1/76

(54) **Telekommunikationseinrichtung mit variabler Leitungsanpassung**
Telecommunication device with variable line adaptation
Dispositif de télécommunication avec adaptation de ligne variable

(30) Priorität: 08.03.1995 DE 19508225; 08.03.1995 DE 19508223
(43) Veröffentlichungstag der Anmeldung: 11.09.1996
(73) Patentinhaber: Home Lab Consult Dieter Wezel, 7208 Malans (CH)
(72) Erfinder: Grossmann, Peter, 84051 Essenbach (DE); Wezel, Dieter, 7208 Malans (CH)
(74) Vertreter: Schaumburg, Thoenes, Thurn Patentanwälte

(56) Entgegenhaltungen:
- DE-A- 3 339 695
- DE-A- 3 911 915
- GB-A- 2 076 262

## Beschreibung

Die Erfindung betrifft allgemein eine Telekommunikationseinrichtung mit mindestens zwei Telekommunikations-Anschlüssen zum Anschließen zweier über ein Kommunikationsnetz mit mindestens einer Vermittlungseinrichtung verbindbarer analoger Teilnehmeranschlußeinheiten.

Telekommunikationseinrichtungen mit Telekommunikationsnetz-Anschlüssen zum Anschließen analoger Teilnehmeranschlußeinheiten sind, auch mit mindestens zwei Telekommunikations-Anschlüssen in Form von kleinen Kommunikationsnebenstellenanlagen beispielsweise aus dem Handbuch "ascom CASATEL 3" der Ascom Business Systems AG, CH-4503 Solothurn sowie dem Firmenprospekt "HICOM 100, Der neue Standard, um einfach komfortabler zu telefonieren", (1989) der Siemens AG, D-8000 München, bekannt.

Die Erfindung betrifft auch eine Einrichtung zum wahlweisen Weiterleiten eines über eine der Teilnehmeranschlußeinheiten ankommenden Rufes über die andere Teilnehmeranschlußeinheit an einen bestimmten fernen Teilnehmeranschluß.

Solche Einrichtungen sind aus der Installations- und Bedienungsanleitung zum Anrufumleiter TC202 von WIPE ELECTRONIC GMBH & CO KG/ ALBRECHT ELECTRONIC GMBH bekannt. Solche Einrichtungen schalten nach der Veranlassung eines Verbindungsaufbaus von ihrem zweiten Netzanschluß zu einem zweiten fernen Endgerät einen am ersten Netzanschluß von einem ersten fernen Endgerät kommenden Ruf zu ihrem zweiten Netzanschluß durch. Hierbei kann bei Verbindungen mit hoher Dämpfung die Sprachqualität zwischen beiden fernen Endgeräten sehr schlecht sein oder eine Verständigung vollkommen ausgeschlossen sein. Insbesondere bei Verbindungen zwischen Faksimilegeräten oder Datenendgeräten ist eine solch schlechte Empfangsqualität aufgrund einer daraus resultierenden hohen Übertragungsfehlerrate sehr ungünstig.

Ein Problem aller genannten Telekommunikationseinrichtungen ist die Mithörverstärkung auf der netzabgewandten Seite, deren Minimierung in analogen Kommunikationssystemen sehr aufwendig ist. Durch eine zu hohe Mithörverstärkung wird die Sprachqualität bzw. die Erkennbarkeit der empfangenen Signale ungünstig beeinflußt.

Ein weiteres Problem der genannten Telekommunikationseinrichtungen ist die Festlegung des Signalpegels des in das angeschlossene Kommunikationsnetz abgegebenen Nutzsignals. Telekommunikationseinrichtungen können nur Nutzsignale mit begrenztem Signalpegel in das angeschlossene Kommunikationsnetz einspeisen, um ein Übersprechen zwischen voneinander unabhängigen Verbindungen zu vermeiden. Außerdem darf eine Entdämpfung innerhalb eines Kommunikationsnetzes nicht beliebig groß sein, um durch Mitkopplung bedingtes Schwingen zu vermeiden. Die Übersprechneigung und die Schwingneigung einer Telekommunikationsanlage sind hierbei von lokalen Gegebenheiten des Kommunikationsnetzes abhängig, so daß der maximale Nutzsignalpegel des Sendesignals bzw. dessen maximale Verstärkung für den ungünstigsten Fall der Netzbedingungen ausgelegt sein müssen. Ein zu niedriger Signalpegel führt hierbei zu einem ungünstigeren Signal/Rauschverhältnis. Ein zu hoher Signalpegel führt zu Übersprechen und ggf. zu Schwingungen. In jedem Fall wird die Signalerkennbarkeit, wie z.B. die Sprachqualität an einem fernen Endgerät verschlechtert.

Aus der DE-A 39 11 915 ist eine Telekommunikationseinrichtung mit zwei Telekommunikationsnetzanschlüssen zum Anschließen zweier über ein Telekommunikationsnetz mit mindestens einer Vermittlungseinrichtung verbindbarer analoger Teilnehmeranschlußeinheiten bekannt. Beide Telekommunikatonsnetzanschlüsse haben jeweils entsprechend der angeschalteten Leitung eine einstellbare Eingangsimpedanz. Hierzu ist an jedem der Telekommunikationsnetzanschlüsse eine 2-Draht/4-Draht-Umsetzvorrichtung vorgesehen, die gegebenenfalls als elektronische Gabelschaltung mit automatischer Leitungsimpedanzanpassung oder einer leitungslängenabhängigen Verstärkungsregelung realisiert sein kann. Diese Telekommunikationseinrichtung hat mindestens einen Endgeräteanschluß zum Anschließen eines Kommunikationsnetzgerätes und eine Schaltvorrichtung zum Verbinden von einem oder von beiden Telekommuniationsnetzanschlüssen mit dem Endgeräteanschluß. Eine Durchschaltvorrichtung kann wahlweise jeweils den 4-Draht-seitigen Signalausgang der einen Gabelschaltung mit dem 4-Draht-seitigen Signaleingang der anderen Gabelschaltung verbinden. Hierzu ist eine Vestärkungsvorrichtung zum verstärkten Abgeben der jeweils an einem Telekommunikationsnetzanschluß empfangenen Signale an den jeweils anderen Telekommunikationsnetzanschluß vorgesehen. Zusätzlich kann eine leitungslängenabhängige Verstärkungsregelung eingesetzt werden.

Die GB-A-2 076 262 beschreibt eine Einrichtung zum Kompensieren einer Telefonleitung in einem automatischen Telefonsystem. Innerhalb eines von einem Telekommunikationsnetztreiber zur Verfügung gestellten Kommunikatonsnetzes werden längs einer Übertragungsleitung Übertragungsparameter mit Hilfe von Meßvorrichtungen gemessen. Es wird eine Vielzahl von Kompensationsnetzwerken bereitgestellt, die zur Kompensation von Übertragungsparametern in den Leitungsweg geschaltet werden.

Aufgabe der Erfindung ist das Bereitstellen einer Telekommunikationseinrichtung zum Anschluß an mindestens zwei, insbesondere analoge Telekommunikationsnetzanschlußeinheiten, mit der die Signalerkennbarkeit optimiert ist.

Erfindungsgemäß ist eine Telekommunikationseinrichtung mit mindestens zwei Telekommunikationsnetz-Anschlüssen zum Anschließen zweier über ein Kommunikationsnetz mit mindestens einer Vermittlungseinrichtung verbindbarer analoger Teilnehmeranschlußeinheiten vorgesehen. Hierbei haben die Telekommunikationsnetz-Anschlüsse jeweils eine einstellbare Eingangsimpedanz. Eine Steuereinrichtung ist vorgesehen, um Meßsignale an einem der Telekommunikationsnetz-Anschlüsse auszugeben, um diese Meßsignale über den anderen der Telekommunikationsnetz-Anschlüsse bei Verbindung der beiden Telekommunikationsnetz-Anschlüsse über das Kommunikationsnetz zu empfangen, um Übertragungsparameter der physikalischen Verbindung über die Teilnehmeranschlußeinheiten und das Kommunikationsnetz auf der Grundlage der gesendeten und empfangenen Meßsignale zu ermitteln und um die Eingangsimpedanz mindestens eines der Telekommunikationsnetz-Anschlüsse zu variieren. Die Telekommunikationsnetz-Anschlüsse zum Anschließen analoger Teilnehmeranschlußeinheiten bekannter Telekommunikationseinrichtungen sind bezüglich ihrer Eingangsimpedanz nach pauschalen Vorgaben des Netzbetreibers oder überhaupt nicht an die an der zugeordneten Teilnehmeranschlußeinheit vorliegende Netzimpedanz angepaßt.

Demgegenüber ermöglicht eine erfindungsgemäße Telekommunikationseinrichtung für den Fall, daß mindestens zwei Telekommunikationsnetz-Anschlüsse zum Anschließen zweier über ein Kommunikationsnetz mit mindestens einer Vermittlungseinrichtung verbindbarer analoger Teilnehmeranschlußeinheiten vorgesehen sind ein einfaches genaues Anpassen der Eingangsimpedanz der einzelnen Telekommunikationsnetz-Anschlüsse an die tatsächlichen Netzgegebenheiten. Hierbei ist es insbesondere möglich, abhängig vom einzelnen Anwendungsfall - beispielsweise Datenübertragung, Sprachübertragung zu einem an die Einrichtung angeschlossenen Endgerät, Sprachübertragung von einem Telekommunikationsnetz-Anschluß zum anderen Telekommunikationsnetz-Anschluß, Durchschalten eines von einem fernen Endgerät über den ersten Teilnehmernetzanschluß ankommenden Rufes zu einem weiteren fernen Endgerät über den zweiten Teilnehmernetzanschluß etc. - durch eine bestimmte Fehlanpassung einen gewünschten Effekt, beispielsweise eine subjektiv optimale Sprachqualität oder eine die Leitungsdämpfung zwischen den beiden Teilnehmernetzanschlüssen und der jeweils nächstgelegenen Vermittlungseinrichtung des Kommunikationsnetzes kompensierenden Entdämpfung, zu erzielen.

Ist beispielsweise als Übertragungsparameter die frequenzabhängige Dämpfung vorgesehen, so kann die Eingangsimpedanz eines oder beider Telekommunikationsnetz-Anschlüsse variiert werden, bis ein gewünschter Frequenzverlauf der Dämpfung erreicht ist. Ist das Ziel der Anpassung eine objektiv optimale Sprachqualität, so ist eine Eingangsimpedanz einstellbar, die innerhalb eines bestimmten Frequenzbereichs einen linearen Dämfungsverlauf liefert. Ist das Ziel der Anpassung eine vom Anwendungsfall abhängige subjektive Optimierung der Sprachqualität, so kann die Eingangsimpedanz in gewünschter Weise innerhalb bestimmter Grenzen zum Erreichen einer Fehlanpassung eingestellt werden, um eine gewünschte Filterwirkung, d.h. einen gewünschten nichtlinearen Dämpfungsverlauf zu erzielen.

Ein anderes Einstellkriterium für die günstigste Eingangsimpedanz, um die Sprachqualität bzw. Signalerkennbarkeit zu verbessern, ist eine maximale Mithördämpfung. Bei Anpassung der Eingangsimpedanzen beider Teilnehmernetzanschlüsse mit dem Kriterium maximaler Mithördämpfung ist u. a. ein maximaler Sendesignalpegel einstellbar, ohne daß Schwingungen bzw. zu große Reflexionen auf Leitungen auftreten.

Wenn das Durchschalten eines von einem fernen Endgerät über den ersten Teilnehmernetzanschluß ankommenden Rufes zu einem weiteren fernen Endgerät über den zweiten Teilnehmernetzanschluß beabsichtigt ist, kann mit einer erfindungsgemäßen Telekommunikationseinrichtung die Durchgangsdämpfung von einem Teilnehmernetzanschluß zu dem anderen Teilnehmernetzanschluß ermittelt werden, wobei als Kriterium für eine optimale einzustellende Eingangsimpedanz jedes Teilnehmernetzanschlusses die maximale Mithördämpfung gewählt ist. Die Ermittlung der Durchgangsdämpfung sowie der optimalen Eingangsimpedanzwerte für beide Teilnehmernetzanschlüsse wird hierbei bei Installation der Telekommunikationseinrichtung einmal vorgenommen. Die entsprechenden Eingangsimpedanzwerte sind dann bei einem genannten Anwendungsfall immer einstellbar und ein Verstärkungsfaktor, mit dem das jeweils empfangene Nutzsignal weitergesendet wird, ist abhängig von dem einmal ermittelten Dämpfungsfaktor einstellbar.

Ermittelt die Steuereinrichtung in einer erfindungsgemäßen Telekommunikationseinrichtung einen Übertragungsparameter, der als Einstellkriterium für die günstigste Eingangsimpedanz vorgesehen ist, mehrmals, jeweils nach Variation der Eingangsimpedanz einer oder beider Teilnehmeranschlußeinheiten, so sieht ein einfacher Steuerungsablauf vor, daß die Steuereinrichtung einen Eingangsimpedanzwert für einen bzw. für beide Telekommunikations-Netzanschlüsse auswählt, der den günstigsten, als Einstellkriterium gewählten Übertragungsparameter liefert. Dies kann beispielsweise der Eingangsimpedanzwert bzw. können die Eingangsimpedanzwerte sein, die den linearsten Frequenzgang liefern. Ein anderes, oben bereits genanntes Kriterium zum Auswählen von Eingangsimpedanzwerten ist die größte Mithördämpfung.

In einer günstigen Ausgestaltungsform der Erfindung ist an jedem der Telekommunikationsnetz-Anschlüsse eine 2-Draht/4-Draht-Umsetzvorrichtung vorgesehen. Dies ermöglicht u.a. ein gezieltes Verstärken der in das Kommunikationsnetz zu sendenden Nutzsignale. Ein weiterer Vorteil der Verwendung dieser 2-Draht/4-Draht-Umsetzvorrichtung ist es, daß die Mithördämpfung (transhybrid loss) leicht ermittelbar ist.

Eine variable Eingangsimpedanz ist u.a. durch die Verwendung von 2-Draht/4-Draht-Umsetzvorrichtungen mit einstellbarer Eingangsimpedanz erzielbar. In diesem Falle stellt die Steuereinrichtung über eine variierbare Stellgröße die Eingangsimpedanz ein.

Eine andere Möglichkeit, die Eingangsimpedanz zu variieren, ergibt sich bei Verwendung von Signal-Codier bzw. Decodier-Filtern, wie sie beispielsweise aus dem "User's Manual 03.92, ICs for Communications, Signal Processing Codec Filter SICOFI PEB 2060", Seiten 42 und 43 der Siemens Aktiengesellschaft und aus dem "Telecom's IC Handbook" von GEC Plessey, February 1994, Seiten 262 bis 263 bekannt sind, die jeweils einen 4-Draht-Analogsignaleingang mit bidirektionaler Analog-Digital-Trennstelle haben und die auf der Digitalsignalseite von dem Eingangssignal unter Verwendung eines Impedanzanpassungsfilters abgeleitete Komponenten zum Ausgangssignal hinzufügen, um die Eingangsimpedanz zu variieren.

Falls eine Verstärkung des an das Kommunikationsnetz abzugebenden Signals für mindestens einen der Telekommunikationsnetz-Anschlüsse vorgesehen ist, kann die erforderliche Verstärkungsvorrichtung bei Verwendung solcher Signal-Codier bzw. Decodier-Filter durch diese Signal-Codier bzw. Decodier-Filter realisiert werden.

Ist beabsichtigt, in einer erfindungsgemäßen Telekommunikationseinrichtung die beiden Telekommunikationsnetz-Anschlüsse mit Hilfe einer Durchschalteeinrichtung zu verbinden, so wird diese Durchschalteeinrichtung bei Verwendung von Signal-Codier bzw. Decodier-Filtern für jeden Telekommunikationsnetz-Anschluß auf der Digitalsignalseite dieser Signal-Codier bzw. Decodier-Filter, und zwar jeweils an der zur Übertragung von pulscodemodulierten Signalen vorgesehenen PCM-Schnittstelle vorgesehen.

In einer weiteren Ausgestaltung der Erfindung ist die Telekommunikationseinrichtung mit einem oder mehreren Endgeräteanschlüssen zum Anschließen von Kommunikationsendgeräten ausgestattet, wobei diese Endgeräteanschlüsse durch eine Schaltvorrichtung jeweils mit mindestens einem der Telekommunikationsnetz-Anschlüsse verbindbar sind. Eine besonders günstige Ausgestaltunsform einer solchen Telekommunikationseinrichtung kann auch mindestens einen dieser Endgeräteanschlüsse gleichzeitig mit beiden Telekommunikationsnetz-Anschlüssen verbinden. Dadurch wird eine Konferenzschaltung mit zwei fernen Endgeräten und mindestens einem an der erfindungsgemäßen Telekommunikationseinrichtung angeschlossenen Endgerät ermöglicht.

Die genannte Schaltvorrichtung zum Verbinden mindestens eines der Telekommunikationsnetz-Anschlüsse mit mindestens einem Endgeräteanschluß wird vorzugsweise durch eine Schaltmatrix realisiert.

Eine solche Schaltmatrix, beispielsweise eine kommerziell erhältliche Analogschaltmatrix vom Typ SC11390 der Firma SIERRA, kann hierbei ggf. auch zum Durchschalten der beiden Telekommunikationsnetz-Anschlüsse verwendet werden. Werden jedoch die oben erwähnten Signal-Codier bzw. Decodier-Filter als Teil einer erfindungsgemäßen Steuereinrichtung eingesetzt, so ist das Durchschalten der beiden Telekommunikationsnetz-Anschlüsse in oben erwähnter Weise zu empfehlen, wobei die Analogsignalanschlüsse der beiden Signal-Codier bzw. Decodier-Filter über die genannte Schaltmatrix an die jeweils zugeordneten Telekommunikationsnetz-Anschlüsse schaltbar sind.

Wird ein Durchschalten der beiden Telekommunikationsnetz-Anschlüsse durch jeweiliges Verbinden des 4-Draht-seitigen Analogsignalausganges der einen 2-Draht/4-Draht-Umsetzvorrichtung mit dem 4-Draht-seitigen Analogsignaleingang der anderen 2-Draht/4-Draht-Umsetzvorrichtung vorgenommen, so ist eine ggf. vorzusehende Verstärkungsvorrichtung zum Verstärken des jeweils an das angeschlossene Kommunikationsnetz abzugebenden Signales, in Signalflußrichtung gesehen, vorzugsweise jeweils nach der Schaltvorrichtung und vor der 2-Draht/4-Draht-Umsetzvorrichtung anzuordnen. Durch eine entsprechende Anordnung wird die Gefahr einer durch diese Entdämpfung bedingten Schwingneigung reduziert.

Ist in einer erfindungsgemäßen Telekommunikationseinrichtung eine Verstärkungsvorrichtung vorgesehen, die bei einem Verbinden der beiden Telekommunikationsnetz-Anschlüsse miteinander jeweils die an einem der Telekommunikationsnetz-Anschlüsse empfangene Nutzinformation um einen Verstärkungsfaktor verstärkt an den anderen Telekommunikationsnetz-Anschluß abgibt, so wird dieser Verstärkungsfaktor vorzugsweise abhängig von der zu einem früheren Zeitpunkt ermittelten Dämpfung zwischen den Telekommunikationsnetz-Anschlüssen über das angeschlossene Kommunikationsnetz festgelegt. Hierzu wird vorzugsweise der Dämpfungswert von der 4-Draht-Seite des 2-Draht/4-Draht-Umsetzers des ersten Telekommunikationsnetz-Anschlusses über das Kommunikationsnetz und die nächstgelegene Vermittlungseinrichtung des Kommunikationsnetzes bis zur 4-Draht-Seite des 2-Draht/4-Draht-Umsetzers des anderen Telekommunikationsnetz-Anschlusses ermittelt. Wird eine Entdämpfung, also der jeweils erwähnte Verstärkungsfaktor in diesem Falle in der Größenordnung des ermittelten Dämpfungswertes festgelegt, so erfüllt eine Verbindung zwischen zwei fernen Endgeräten über die beiden Telekommunikationsnetz-Anschlüsse die Bedingungen des Betreibers des entsprechenden Kommunikationsnetzes.

Der Verstärkungsfaktor sollte in den vorgenannten Fällen einen vom angeschlossen Kommunikationsnetz abhängigen Maximalwert nicht überschreiten. Dieser Maximalwert sollte vorzugsweise nicht größer sein als die vom Netzbetreiber vorgeschriebene maximale Dämpfung zwischen zwei Endgeräten eines 2-Teilnehmerrufs.

Eine Weiterbildung der beschriebenen Erfindung, ist in einer Telekommunikationseinrichtung zu sehen, mit mindestens einem ersten und einem zweiten Telekommunikationsnetz-Anschluß zum Anschließen zweier über ein Kommunikationsnetz, mit mindestens einer Vermittlungseinrichtung verbindbarer analoger Teilnehmeranschlußeinheiten, mit einer Wähleinrichtung zum Veranlassen eines Verbindungsaufbaus über den zweiten Telekommunikationsnetz-Anschluß zu einem Kommunikationsendgerät, und mit einer Durchschaltvorrichtung zum wahlweisen Weiterschalten von von dem ersten Telekommunikationsnetz-Anschluß empfangenen Signalen an den zweiten Telekommunikationsnetz-Anschluß sowie zum wahlweisen Weiterschalten von von dem zweiten Telekommunikationsnetz-Anschluß empfangenen Signalen an den ersten Telekommunikationsnetz-Anschluß. Eine solche Telekommunikationseinrichtung enthält eine Verstärkungsvorrichtung zum Verstärken mindestens der Nutzsignalkomponente der von dem ersten Telekommunikationsnetz-Anschluß empfangenen Signale sowie zum Verstärken mindestens der Nutzsignalkomponente der von dem zweiten Telekommunikationsnetz-Anschluß empfangenen Signale.

Es können der erste und/oder der zweite Telekommunikationsnetz-Anschluß einer solchen Telekommunikationseinrichtung auch zum Anschließen an ein digitales Kommunikationsnetz vorgesehen sein. Sie ermöglicht unabhängig von den Leitungsverhältnissen eine gute Sprachqualität durch ein Verfahren zum Weiterschalten eines von einem ersten fernen Endgerät über ein globales Kommunikationsnetz an die Telekommunikationseinrichtung verbundenen Rufs über das globale Kommunikationsnetz an ein zweites fernes Endgerät, wobei von dem ersten fernen Endgerät empfangene Signale verstärkt und diese verstärkten Signale an das Kommunikationsnetz zum Übertragen an das zweite ferne Endgerät weitergeschaltet werden sowie von dem zweiten fernen Endgerät empfangene Signale verstärkt und diese verstärkten Signale an das Kommunikationsnetz zum Übertragen an das erste ferne Endgerät weitergeschaltet werden.

Eine solche Telekommunikationseinrichtung ermöglicht beim Durchschalten eines von einem fernen Endgerät über ein Kommunikationsnetz ankommenden Rufes zu einem weiteren fernen Endgerät über das Kommunikationsnetz das Erzielen einer guten Sprachqualität durch eine die Leitungsdämpfung zwischen der Telekommunikationseinrichtung und der jeweils nächstgelegenen Vermittlungseinrichtung des Kommunikationsnetzes zumindest teilweise kompensierende Entdämpfung. Vorzugsweise wird die Entdämpfung hierbei abhängig von der Dämpfung in dem Teil der physikalischen Verbindung zwischen einer in der Telekommunikationseinrichtung enthaltenen Durchschaltvorrichtung und den jeweils in Richtung auf die beiden fernen Endgeräte nächstgelegenen Netzknoten vorgenommen. Dies ist unabhängig von der Art des angeschlossenen Telekommunikationsnetzes. Die beiden Telekommunikationsnetz-Anschlüsse können durch zwei Anschlußeinheiten eines Analognetzes, aber auch durch zwei Nutzkanäle eines ISDN-Basisanschlusses realisiert sein. Darüber hinaus kann die Telekommunikationseinrichtung auch in jeweils entsprechender Weise an ein analoges oder ein digitales Funknetz angeschlossen sein. Auch das Durchschalten eines von einem Netz der einen Art kommenden Rufs an ein Netz einer anderen Art ist möglich.

In einer Ausgestaltung der Erfindung werden die gesamten empfangenen Signale verstärkt weitergeschaltet. Abhängig von der Signalart kann es jedoch empfehlenswert sein, nur die Nutzkomponenten der empfangenen Signale verstärkt weiterzuschalten.

In einer Weiterbildung der erfindungsgemäßen Telekommunikationseinrichtung kann die Durchgangsdämpfung von einer Teilnehmeranschlußeinheit zur anderen Teilnehmeranschlußeinheit eines analogen Kommunikationsnetzes über das Kommunikationsnetz und eine Vermittlungseinrichtung dieses Kommunikationsnetzes ermittelt werden. Die Ermittlung der Durchgangsdämpfung sowie in einer besonders günstigen Ausgestaltung der Telekommunikationseinrichtung die Ermittlung der optimalen Eingangsimpedanzwerte für beide Teilnehmernetzanschlüsse kann hierbei ggf. bei Installation der Telekommunikationseinrichtung einmal vorgenommen werden. Ein Verstärkungsfaktor, mit dem das jeweils empfangene Nutzsignal weitergesendet wird, ist dann bei einem genannten Anwendungsfall immer abhängig von dem ermittelten Dämpfungsfaktor einstellbar. Wird darüber hinaus die Eingangsimpedanz jedes der jeweils mit einer Teilnehmeranschlußeinheit verbundenen Teilnehmernetzanschlüsse in Hinblick auf eine maximale Mithördämpfung optimiert, so sind die entsprechenden Eingangsimpedanzwerte ebenfalls bei einem genannten Anwendungsfall immer einstellbar.

Vorzugsweise wird in einer erfindungsgemäßen Telekommunikationseinrichtung ein Verbindungsaufbau zu einem zweiten fernen Endgerät abhängig vom Aktivierungszustand einer Weiterschaltfunktion vorgenommen. Der entsprechende Aktivierungszustand kann hierbei beispielsweise durch den Zustand einer zugeordneten Speicherzelle oder die Schalterstellung eines Schalters festgelegt sein. Der Aktivierungszustand kann hierzu durch einen Ruf von einem fernen Kommunikationsendgerät mit hierzu vorgesehener Signalgabe, beispielsweise einem einer bestimmten Zeichenfolge entsprechenden Mehrfrequenztonsignal festgelegt werden. Mit Hilfe eines solchen Rufs kann beispielsweise auch die Rufnummer eines zweiten fernen Endgerätes, zu dem eine Weiterschaltung erfolgen soll, also die Zielrufnummer einer Weiterleitfunktion, festgelegt werden.

In einer anderen Ausgestaltungsform einer erfindungsgemäßen Einrichtung kann die Weiterschaltfunktion abhängig von der aktuellen Zeit aktiviert oder deaktiviert werden. Dies kann bedeuten, daß zu bestimmten Tageszeiten an bestimmten Wochentagen immer eine Rufweiterleitung bei Erfassen eines ankommenden Rufes vorgenommen wird. In entsprechender Weise kann abhängig von der aktuellen Zeit die Zielrufnummer einer Weiterleitfunktion festgelegt werden. In diesem Falle ist es auch möglich, daß eine Rufweiterleitung zu ganz bestimmten fernen Kommunikationsendgeräten in Abhängigkeit von einem vorgegebenen Zeitplan, beispielsweise dem Besuchsplan eines bestimmten Teilnehmers programmgesteuert festgelegt wird. Beispielsweise kann eine Weiterschaltfunktion zu bestimmten Zeiten deaktiviert sein und zu anderen Zeiten aktiviert sein, wobei zusätzlich die Rufnummer, zu der ein von einem ersten fernen Endgerät kommender Ruf weitergeleitet werden soll, von der jeweils aktuellen Zeit abhängig ist.

Insbesondere kann hierbei die Weiterschaltfunktion von einem Computer aktivierbar und deaktivierbar sein.

In einer Weiterbildung der Erfindung wird die Weiterschaltfunktion abhängig von dem Erfassen der Anwesenheit eines bestimmten Teilnehmers durch ein Anwesenheitserfassungssystem jeweils für ein bestimmtes, im Bereich des Erfassungssystems erreichbares Endgerät aktiviert. In einer anderen Weiterbildung der Erfindung wird die Zielrufnummer einer Weiterleitfunktion abhängig von dem Erfassen der Anwesenheit eines bestimmten Teilnehmers durch ein Anwesenheitserfassungssystem festgelegt. Abhängig von der Komplexität des entsprechenden Anwesenheitserfassungssystems ermöglicht die Realisierung eines oder beider der vorgenannten Merkmale ein automatisches Weiterleiten ankommender Rufe zu einem bestimmten Teilnehmer.

In einer einfachen Ausgestaltungsform einer erfindungsgemäßen Einrichtung wird ein Weiterschalten nach Abgabe eines Wahlrufes zu einem zweiten fernen Endgerät unabhängig vom Betriebszustand dieses zweiten fernen Endgerätes durchgeführt. In einer günstigen Ausgestaltung der Erfindung wird ein Weiterschalten erst nach Empfang eines Quittungssignales von dem zweiten fernen Endgerät über die Rufentgegennahme bewirkt. In diesem Fall kann eine Weiterbildung der erfindungsgemäßen Einrichtung vorsehen, daß nach Ablauf einer bestimmten Zeit erfolglosen Versuchens eines Verbindungsaufbaus zu dem zweiten fernen Endgerät ein von einem ersten fernen Endgerät kommender Ruf an ein anderes Endgerät verbunden wird. Dieses andere Endgerät kann insbesondere ein Anrufbeantworter, ein anderes, über eine Weiterschaltfunktion erreichbares fernes Endgerät oder ein an der Telekommunikationseinrichtung angeschlossenes, dem ersten fernen Endgerät nach seiner Art entsprechendes Endgerät sein.

Wird bei aktivierter Weiterschaltfunktion nach einem erfolglosen Weiterschaltversuch eine von einem ersten fernen Endgerät empfangene Nachricht auf einem Anrufbeantworter gespeichert, so sieht eine Weiterbildung der Erfindung vor, daß eine bestimmte Zeit nach dem Aufzeichnen der Nachricht auf dem Anrufbeantworter ein Verbindungsaufbau zu dem zweiten fernen Endgerät veranlaßt wird, um auf das Vorliegen einer Nachricht hinzuweisen.

Eine günstige Ausgestaltung einer erfindungsgemäßen Einrichtung sieht vor, daß die Weiterschaltfunktion durch das Übermitteln einer bestimmten Kennung von dem rufenden ersten fernen Endgerät aktiviert wird. Dadurch ist eine selektive Aktivierung der Weiterschaltfunktion für vom Rufempfänger gewünschte Teilnehmer möglich. Ein solches Verfahren ermöglicht es beispielsweise einem Arzt oder Geschäftsmann, über seine Geschäfts-Rufnummer für von ihm bestimmte Anrufer an seinem privaten Kommunikationsendgerät erreichbar zu sein. Für solche Fälle ist es empfehlenswert, daß die genannte Kennung wahlweise festlegbar ist. Eine entsprechende Kennung kann beispielsweise die Nachwahl einer bestimmten Ziffernfolge sein. Vorzugsweise ist eine solche Kennung durch einen Mehrfrequenztonwahlsender eingebbar. Falls die Telekommunikationseinrichtung an ein ISDN-Netz angeschlossen ist und das erste ferne Kommunikationsendgerät ein ISDN-Endgerät ist, kann als Kennung auch die mit dem Verbindungsaufbau über das ISDN-Netz gelieferte Identifikation des rufenden Endgerätes sein.

Gegebenenfalls kann das Weiterschalten eines von einem ersten fernen Endgerät kommenden Rufes an ein zweites fernes Endgerät bedarfsweise nach Entgegennahme des von dem ersten fernen Endgerät kommenden Rufes durch ein an der Telekommunikationseinrichtung angeschlossenes Endgerät veranlaßt werden. Hierbei kann ggf. das an der Telekommunikationseinrichtung angeschlossene Endgerät durch sogenanntes Makeln entweder mit dem einen oder mit dem anderen fernen Endgerät verbunden sein. In einer anderen Ausgestaltungsform einer erfindungsgemäßen Einrichtung ist es jedoch möglich, daß das an der Telekommunikationseinrichtung angeschlossene Endgerät mit beiden fernen Endgeräten gleichzeitig verbunden ist. Dadurch wird eine Konferenzschaltung zwischen einem an der Telekommunikationseinrichtung angeschlossenen Endgerät und zwei jeweils über ein globales Kommunikationsnetz verbundenen fernen Endgeräten realisiert werden. Hierbei können ggf. noch weitere, an der Telekommunikationseinrichtung angeschlossene Endgeräte zu der Konferenz zugeschaltet werden.

Eine erfindungsgemäße Telekommunikationseinrichtung mit Durchschaltvorrichtung ermöglicht somit an zwei Teilnehmeranschlußeinheiten eines globalen Kommunikationsnetzes die Realisierung einer globalen, einem Benutzer zugeordneten Rufnummer. Wenn eine Rufweiterleitung jeweils zu einem von einem Teilnehmer benutzbaren Endgerät vorgenommen wird, ist dieser Teilnehmer unabhängig von seinem Aufenthaltsort und von dem zum jeweiligen Zeitpunkt verwendeten Kommunikationssystem unter einer, der genannten Telekommunikationseinrichtung zugeordneten Rufnummer erreichbar. Dies ist unabhängig davon, ob die Rufweiterleitung in ein ISDN-Kommunikationsnetz, ein GSM-Kommunikationsnetz oder irgendein anderes, von der Telekommunikationseinrichtung erreichbares Kommunikationsnetz vorgenommen wird.

Eine erfindungsgemäße Telekommunikationseinrichtung ermöglicht somit die Realisierung einer globalen persönlichen Rufnummer mit Hilfe eines peripheren Gerätes.

Nachstehend wird die Erfindung anhand der Figuren näher erläutert. Es zeigen:
- Fig. 1: ein erstes Ausführungsbeispiel einer erfindungsgemäßen Telekommunikationseinrichtung, wobei die erfindungsgemäße Steuereinrichtung durch einen Microcontroller realisiert ist und;
- Fig. 2: ein zweites Ausführungsbeispiel einer erfindungsgemäßen Telekommunikationseinrichtung, wobei die erfindungsgemäße Steuereinrichtung durch einen Microcomputer und zwei Signal-Codier bzw. Decodier-Filter realisiert ist.

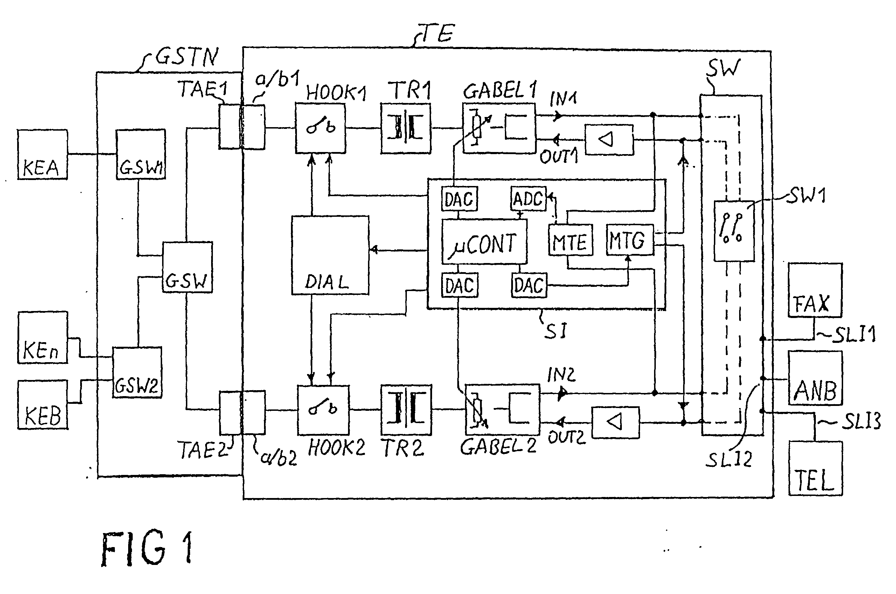

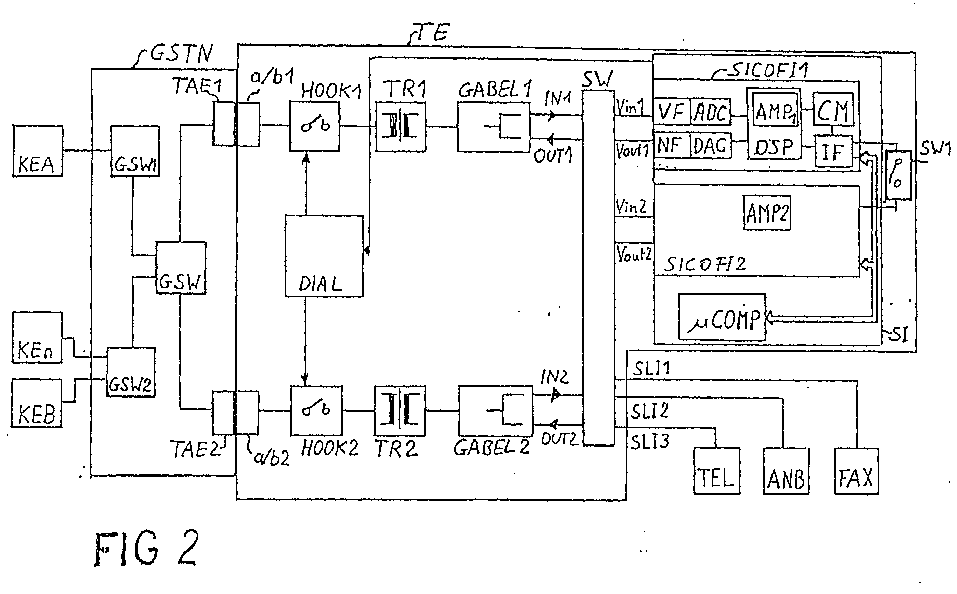

Sowohl Fig. 1 als auch Fig. 2 zeigen jeweils eine Telekommunikationseinrichtung mit zwei Telekommunikationsnetz-Anschlüssen a/b1, a/b2, von denen jeder mit einer Teilnehmeranschlußeinheit TAE1, TAE2 eines Kommunikationsnetzes GSTN verbunden sind. Das Kommunikationsnetz GSTN enthält im gezeigten Ausführungsbeispiel jeweils drei Vermittlungseinrichtungen GSW, GSW1, GSW2, die untereinander verbindbar sind. Die beiden Teilnehmeranschlußeinheiten TAE1, TAE2 sind über eine Vermittlungseinrichtung GSW miteinander verbindbar. Im gezeigten Ausführungsbeispiel ist ein erstes fernes Kommunikationsendgerät KEA der Vermittlungseinrichtung GSW1 zugeordnet und über diese mit anderen Endgeräten verbindbar und ein zweites Kommunikationsendgerät KEB sowie ein weiteres Kommunikationsendgerät KEn sind einer anderen Vermittlungseinrichtung GSW2 zugeordnet und über diese innerhalb des Kommunikationsnetzes GSTN mit anderen Endgeräten verbindbar.

Jeder der Telekommunikationsnetz-Anschlüsse a/b1, a/b2 der Telekommunikationseinrichtung ist über einen für das Belegen der entsprechenden Leitung und für eine Impulswahlgabe vorgesehenen Gabelumschalter HOOK1, HOOK2 und einen Übertrager TR1, TR2 an den 2-Draht-Anschluß einer dem entsprechenden Teilnehmernetzanschluß a/b1, a/b2 zugeordneten 2-Draht/4-Draht-Umsetzvorrichtung GABEL1, GABEL2 geschaltet. In dem Ausführungsbeispiel der Fig. 1 ist diese 2-Draht/4-Draht-Umsetzvorrichtung GABEL1, GABEL2 jeweils derart ausgestaltet, daß die 2-Drahtseitige Eingangsimpedanz über eine Stellgröße einstellbar ist.

Nachstehend wird der weitere Aufbau der in Fig. 1 gezeigten Telekommunikationseinrichtung näher erläutert.

Die in Fig. 1 gezeigte Steuereinrichtung SI enthält einen Meßsignalgeber MTG zum Ausgeben analoger Meßsignale an die Telekommunikationsnetz-Anschlüsse a/b1, a/b2, eine Meßsignalerfassungsvorrichtung MTE zum Empfangen dieser Meßsignale über den jeweils anderen der Telekommunikationsnetz-Anschlüsse a/b2, a/b1 bei Verbindung der beiden Telekommunikationsnetz-Anschlüsse über das Telekommunikationsnetz GSTN und einem Microcontroller µCONT zum Steuern des Meßsignalgebers MTG und der Meßsignalerfassungsvorrichtung MTI, zum Ermitteln von Übertragungsparametern der physikalischen Verbindung über die Teilnehmeranschlußeinheiten TAE1, TAE2 und das Kommunikationsnetz GSTN auf der Grundlage der gesendeten und empfangenen Meßsignale und zum Ausgeben von Stellgrößen zum jeweiligen Steuern der Eingangsimpedanz der 2-Draht/4-Draht-Umsetzvorrichtungen GABEL1 und GABEL2. Hierbei sind zum Umwandeln von Digitalsignalen in Analogsignale Digital-Analogumsetzer DAC und zum Umwandeln von Analogsignalen in Digitalsignale Analog-Digitalwandler ADC vorgesehen.

Die 4-Draht-seitigen Anschlüsse der beiden 2-Draht/4-Draht-Umsetzvorrichtungen GABEL1 und GABEL2 sind jeweils über eine Durchschaltvorrichtung SW1 miteinander verbindbar. Imm Ausführungsbeispiel nach Fig. 1 ist die Durchschaltvorrichtung SW1 Teil einer Vermittlungsvorrichtung SW, die beispielsweise durch eine analoge Schaltmatrix realisierbar ist. Diese Vermittlungseinrichtung SW kann u.a. die beiden Telekommunikationsnetz-Anschlüsse a/b1 und a/b2 jeweils über entsprechende Endgeräteanschluß-Schnittstellen SLI1, SLI2 und SLI3 mit Endgeräten verbinden. Im gezeigten Ausführungsbeispiel sind drei Endgeräteanschlüsse SLI1, SLI2 und SLI3 dargestellt, an die jeweils ein Faxgerät FAX, ein Anrufbeantworter ANB und ein Telefonapparat TEL angeschlossen sind.

Um bei Durchschalten der beiden Telekommunikationsnetz-Anschlüsse a/b1 und a/b2 jeweils das an die 2-Draht/4-Draht-Umsetzvorrichtung auf der 4-Draht-Seite abgegebene Ausgangssignal OUT1 der Telekommunikationseinrichtung TE zu entdämpfen, ist jeweils in Senderichtung vor der 2-Draht/4-Draht-Umsetzvorrichtung GABEL1 und GABEL2 eine Verstärkervorrichtung AMP1 bzw. AMP2 vorgesehen. Diese Verstärkervorrichtungen AMP1 und AMP2 sind im gezeigten Ausführungsbeispiel durch die Steuereinrichtung SI einstellbar. In einer Ausgestaltung des in Fig. 1 gezeigten Ausführungsbeispiels können hierbei die Verstärkervorrichtungen AMP1 und AMP2 in Abhängigkeit von dem Schaltzustand der Durchschaltvorrichtung SW1 aktiviert sein oder nicht. In einer weiteren Ausgestaltungsform des gezeigten Ausführungsbeispiels kann die Verstärkung der Verstärkervorrichtung AMP1 bzw. AMP2 von der Steuereinrichtung SI in Abhängigkeit vom jeweiligen Anwendungsfall einstellbar sein.

Nachstehend wird unter Bezugnahme auf Fig. 2 der Aufbau der Telekommunikationseinrichtung TE des zweiten Ausführungsbeispiels näher erläutert.

In dem in Fig. 2 gezeigten Ausführungsbeispiel sind die 4-Draht-seitigen Anschlüsse der beiden 2-Draht/4-Draht-Umsetzvorrichtungen GABEL1 und GABEL2 jeweils an eine Schaltvorrichtung SW, vorzugsweise eine Vermittlungsvorrichtung in Form einer Schaltmatrix, geschaltet. Die Steuereinrichtung SI ist ebenfalls über zwei 4-Draht-Anschlüsse Vin1, Vout1 und Vin2, Vout2 an diese Schaltvorrichtung angeschlossen. Jeder dieser 4-Draht-Anschlüsse Vin1, Vout1 und Vin2, Vout2 ist jeweils in der Steuereinrichtung SI mit dem Analogsignalanschluß eines Signal-Codier bzw. Decodier-Filter SICOFI1 und SICOFI2 verbunden. Solche Signal-Codier bzw. Decodier-Filter SICOFI1 und SICOFI2 können beispielsweise, wie für das Signal-Codier bzw. Decodier-Filter SICOFI1 dargestellt, aus einem Vorfilter VF und einem nachgeschalteten Analog-Digitalumsetzer ADC für das analoge Eingangssignal Vin1 und aus einem Nachfilter NF und einem diesem vorgeschalteten Digital-Analogumsetzer DAC für das analoge Ausgangssignal Vout1 bestehen. Der genannte Analog-Digitalumsetzer sowie der genannte Digital-Analogumsetzer sind hierbei jeweils auf der Digitalsignalseite mit einem Digitalsignalprozessor DSP verbunden. Der Digitalsignalprozessor DSP dient hierbei zum Ausgeben von Meßsignalen, zum Empfangen dieser Meßsignale und zum Variieren der Eingangsimpedanz der Telekommunikationsnetz-Anschlüsse a/b1 und a/b2. Das Signal-Codier bzw. Decodier-Filter SICOFI1, SICOFI2 enthält außerdem einen Koeffizientenspeicher CM, in dem Koeffizientensätze zum Einstellen des Übertragungsverhaltens des jeweiligen Signal-Codier bzw. Decodier-Filters ablegbar sind. Abhängig von diesen Komponenten kann beispielsweise ein Verstärkungsfaktor einer Verstärkungsvorrichtung für das abzugebende Analogsignal einstellbar sein sowie die zur Analogsignalseite hin wirksame Eingangsimpedanz. Die Signal-Codier bzw. Decodier-Filter SICOFI1 und SICOFI2 können jeweils auf der Digitalsignalseite über mindestens eine Digitalsignal-Schnittstelle IF mit einem Mikrocomputer µCOMP kommunizieren und sind außerdem über diese Digitalsignal-Schnittstelle IF mit der gezeigten Durchschaltvorrichtung SW1 verbunden.

Der Mikrocomputer µCOMP ist zum Steuern des Meßablaufes, zum Ermitteln von Übertragungsparametern der physikalischen Verbindung über die Teilnehmeranschlußeinheiten TAE1 und TAE2 und zum Einschreiben von Koeffizienten in die Koeffizientenspeicher CM vorgesehen.

Für die Funktion der Telekommunikationseinrichtung TE, eine Verbindung zwischen den beiden Teilnehmernetzanschlüssen a/b1 und a/b2 über die Durchschaltvorrichtung SW1 vorzunehmen, ist die Schaltvorrichtung SW in der in Fig. 2 gezeigten Ausgestaltungsform nicht erforderlich. In diesem Falle verbindet die Schaltvorrichtung SW jeweils die 4-Draht-Seite einer 2-Draht/4-Draht-Umsetzvorrichtung GABEL1 oder GABEL2 mit dem Analogsignalanschluß eines Signal-Codier bzw. Decodier-Filters SICOFI1 bzw. SICOFI2.

Die Schaltvorrichtung SW ist jedoch in dem Ausführungsbeispiel nach Fig. 2, genau wie in dem Ausführungsbeispiel nach Fig. 1, über Endgeräteanschlußschnittstellen SLI1, SLI2 und SLI3 mit Kommunikationsendgeräten, wie z.B. einem Faxgerät FAX, einem Anrufbeantworter ANB oder einem Telefonapparat TEL verbindbar.

Somit ermöglicht die Schaltvorrichtung SW sowohl in dem Ausführungsbeispiel nach Fig. 1 als auch in dem Ausführungsbeispiel nach Fig. 2 das Verbinden eines oder mehrerer der Endgeräteanschlüsse SLI1, SLI2 und SLI3 mit einem oder beiden der Telekommunikationsnetz-Anschlüsse a/b1 und a/b2, so daß sowohl eine übliche Nebenstellenanlagen-Funktionalität als auch die Funktion einer Konferenzschaltung realisierbar sind. In einer besonders günstigen Ausgestaltungsform der Erfindung ist es hierbei möglich, sowohl eines, als auch mehrere an die Telekommunikationseinrichtung TE unmittelbar angeschlossene Kommunikationsendgeräte FAX, ANB, TEL gleichzeitig über die beiden Teilnehmeranschlußeinheiten TAE1 und TAE2 des Kommunikationsnetzes GSTN mit zwei fernen Kommunikationsendgeräten KEA und KEB zu verbinden

Außerdem ist es möglich, ausgehend von einer Verbindung zwischen einem unmittelbar an die Telekommunikationseinrichtung angeschlossenen Kommunikationsendgerät TEL, ANB oder FAX zu einem ersten fernen Endgerät KEA einen weiteren Verbindungsaufbau zu einem zweiten fernen Endgerät KEB zu veranlassen und dann die beiden fernen Endgeräte KEA und KEB miteinander zu verbinden.

## Patentansprüche

1. Telekommunikationseinrichtung mit mindestens zwei Telekommunikationsnetz-Anschlüssen (a/b1, a/b2) zum Anschließen zweier über ein Kommunikationsnetz (GSTN) mit mindestens einer Vermittlungseinrichtung (GSW) verbindbarer analoger Teilnehmeranschlußeinheiten (TAE1, TAE2), wobei die Telekommunikationsnetz-Anschlüsse (a/b1, a/b2) jeweils eine einstellbare Eingangsimpedanz haben und mit mindestens einem Endgeräteanschluß (SLI1, SLI2, SLI3) zum Auschließen mindestens eines Telekommunikationsendgerätes (TEL, ANB, FAX) verbunden sind, **gekennzeichnet durch** eine Steuereinrichtung (SI)
- zum Ausgeben von Meßsignalen an einem der Telekommunikationsnetz-Anschlüsse (a/b1, a/b2),
- zum Empfangen dieser Meßsignale über den anderen der Telekommunikationsnetz-Anschlüsse (a/b2, a/b1) bei Verbindung der beiden Telekommunikationsnetz-Anschlüsse (a/b1, a/b2) über das Kommunikationsnetz (GSTN),
- zum Ermitteln von Übertragungsparametern der physikalischen Verbindung über die Teilnehmeranschlußeinheiten (TAE1, TAE2) und das Kommunikationsnetz (GSTN) auf der Grundlage der gesendeten und empfangenen Meßsignale und
- zum Variieren der Eingangsimpedanz mindestens eines der Telekommunikationsnetz-Anschlüsse (a/b1, a/b2).

2. Einrichtung nach Anspruch 1, **dadurch gekennzeichnet, daß** der zu ermittelnde Übertragungsparameter die frequenzabhängige Dämpfung ist.

3. Einrichtung nach Anspruch 1, **dadurch gekennzeichnet, daß** der zu ermittelnde Übertragungsparameter die Mithördämpfung ist.

4. Einrichtung nach einem der vorhergehenden Ansprüche, **gekennzeichnet durch** ein mehrmaliges Ermitteln der Übertragungsparameter, jeweils nach Variation der Eingangsimpedanz.

5. Einrichtung nach Anspruch 4, **gekennzeichnet durch** eine Auswahlvorrichtung zum Auswählen des Eingangsimpedanzwertes, der beim Ermitteln von Übertragungsparametern den linearsten Frequenzgang bewirkt hat.

6. Einrichtung nach einem der Ansprüche 1 bis 4, **gekennzeichnet durch** eine Auswahlvorrichtung zum Auswählen des Eingangsimpedanzwertes, der bei der Ermittlung von Übertragungsparametern die größte Mithördämpfung bewirkt hat.

7. Einrichtung nach einem der vorhergehenden Ansprüche, **gekennzeichnet durch** eine Wähleinrichtung (DIAL) zum Veranlassen eines Verbindungsaufbaus über den zweiten Telekommunikationsnetz-Anschluß (a/b2) zu einem Kommunikationsendgerät (KEB), eine Durchschaltvorrichtung (SW1) zum wahlweisen Weiterschalten von von dem ersten Telekommunikationsnetz-Anschluß (a/b1) empfangenen Signalen an den zweiten Telekommunikationsnetz-Anschluß (a/b2) sowie zum wahlweisen Weiterschalten von von dem zweiten Telekommunikationsnetz-Anschluß (a/b2) empfangenen Signalen an den ersten Telekommunikationsnetz-Anschluß (a/b1), und **durch** eine Verstärkungsvorrichtung (AMP1, AMP2) zum Verstärken mindestens der Nutzsignalkomponente der von dem ersten Telekommunikationsnetz-Anschluß (a/b1) empfangenen Signale sowie zum Verstärken mindestens der Nutzsignalkomponente der von dem zweiten Telekommunikationsnetz-Anschluß (a/b2) empfangenen Signale.

8. Einrichtung nach einem der vorhergehenden Ansprüche, **gekennzeichnet durch** jeweils eine 2-Draht/4-Draht-Umsetzvorrichtung (GABEL1, GABEL2) an jedem der Telekommunikationsnetz-Anschlüsse (a/b1, a/b2).

9. Einrichtung nach Anspruch 8, **dadurch gekennzeichnet, daß** mindestens eine der 2-Draht/4-Draht-Umsetzvorrichtungen (GABEL1, GABEL2) eine über mindestens eine durch die Steuereinrichtung (SI) variierbare Stellgröße einstellbare Eingangsimpedanz hat.

10. Einrichtung nach Anspruch 8 oder 9, **dadurch gekennzeichnet, daß** dem 4-Draht-seitigen Signalausgang jeder 2-Draht/4-Draht-Umsetzvorrichtung (GABEL1, GABEL2) jeweils ein Analog/Digitalumsetzer (ADC) zugeordnet ist und dem 4-Draht-seitigen Signaleingang jeder 2-Draht/4-Draht-Umsetzvorrichtung (GABEL1, GABEL2) ein Digital/Analogumsetzer (DAC) zugeordnet ist und daß eine Durchschaltevorrichtung (SW1) zum Aufbau einer Verbindung zwischen den beiden 2-Draht/4-Draht-Umsetzvorrichtungen auf der Digitalsignalseite vorgesehen ist.

11. Einrichtung nach einem der vorhergehenden Ansprüche, **gekennzeichnet durch** eine Schaltvorrichtung (SW) zum Verbinden mindestens eines der Telekommunikationsnetz-Anschlüsse (a/b1, a/b2) mit dem Endgeräteanschluß (SLI1, SLI2, SLI3).

12. Einrichtung nach Anspruch 11, **dadurch gekennzeichnet, daß** die Schaltvorrichtung eine Schaltmatrix (SW) ist und daß eine Durchschaltvorrichtung (SW1) zum Verbinden der beiden Telekommunikationsnetz-Anschlüsse (a/b1, a/b2) Teil der Schaltmatrix (SW) ist.

13. Einrichtung nach einem der Ansprüche 11 oder 12, **dadurch gekennzeichnet, daß** der Endgeräteanschluß (SLI1, SLI2, SLI3) über die Schaltvorrichtung mit beiden Telekommunikationsnetz-Anschlüssen (a/b1, a/b2) gleichzeitig verbindbar ist.

14. Einrichtung nach einem der vorhergehenden Ansprüche, **gekennzeichnet durch** mindestens zwei Signal-Codier bzw. Decodier-Filter (SICOFI1, SICOFI2) mit einem Impedanzanpassungsfilter zum Variieren von deren Eingangsimpedanz.

15. Einrichtung nach Anspruch 14, **dadurch gekennzeichnet, daß** die Durchschaltvorrichtung (SW1) die Digitalein/Ausgänge der beiden Signal-Codier bzw. Decodier-Filter (SICOFI1, SICOFI2) miteinander verbindet.

## Claims

1. Telecommunication apparatus having at least two telecommunications network connections (a/b1, a/b2) for connection of two analogue subscriber units (TAE1, TAE2) connectable to at least one dialling exchange means (GSW) via a communications network (GSTN), the telecommunications network connections (a/b1, a/b2) each having an adjustable input impedance and being connected to at least one terminal port (SLI1, SLI2, SLI3) for connection of at least one telecommunication terminal apparatus (TEL, ANB, FAX), **characterized by** control means (SI) for
- outputting measuring signals at one of the telecommunications network connections (a/b1, a/b2),
- receiving said measuring signals via the other of the telecommunications network connections (a/b1, a/b2) when said telecommunications network connections (a/b1, a/b2) are connected to each other via said communications network (GSTN),
- determining transmission parameters of the physical connection via said subscriber units (TAE1, TAE2) and said communications network (GSTN) on the basis of the measuring signals emitted and received, and
- varying the input impedance of at least one of said telecommunications network connections (a/b1, a/b2).

2. Apparatus according to claim 1, **characterized in that** said transmission parameter to be determined comprises the frequency-dependant attenuation.

3. Apparatus according to claim 1, **characterized in that** said transmission parameter to be determined comprises the listening attenuation.

4. Apparatus according to any of the preceding claims, **characterized by** a repeated determination of said transmission parameters, each time after varying the input impedance.

5. Apparatus according to claim 4, **characterized by** a selection means for selecting the input impedance value that has caused the most linear frequency response upon determination of the transmission parameters.

6. Apparatus according to any of claims 1 to 4, **characterized by** a selection means for selecting the input impedance value that has caused the greatest listening attenuation upon determination of the transmission parameters.

7. Apparatus according to any of the preceding claims, **characterized by** a dialling means (DIAL) for causing a connection to be established to a communication terminal device (KEB) via the second telecommunications network connection (a/b2), a line switching unit (SW1) for selectively transferring signals received by said first telecommunications network connection (a/b1) to said second telecommunications network connection (a/b2) and for selectively transferring signals received by said second telecommunications network connection (a/b2) to said first telecommunications network connection (a/b1), and by an amplifying device (AMP1, AMP2) for amplifying at least the useful signal component of the signals received by said first telecommunications network connection (a/b1) and for amplifying at least the useful signal component of the signals received by said second telecommunications network connection (a/b2).

8. Apparatus according to any of the preceding claims, **characterized by** a two-wire/four-wire converter (GABEL1, GABEL2) at each of the telecommunications network connections (a/b1, a/b2), respectively.

9. Apparatus according to claim 8, **characterized in that** at least one of the two-wire/four-wire converters (GABEL1, GABEL2) has an input impedance adjustable by means of at least one control value variable by means of said control means (SI).

10. Apparatus according to claims 8 or 9, **characterized in that** an analogue-digital converter (ADC) is assigned to the four-wire side signal output of each of said two-wire/four-wire converters (GABEL1, GABEL2), respectively, and **in that** a digital-analogue converter (DAC) is assigned to the four-wire side signal input of each of said two-wire/four-wire converters (GABEL1, GABEL2) and **in that** a line switching unit (SW1) for establishing a connection between the two two-wire/four-wire converters on the digital signal side is provided.

11. Apparatus according to any of the preceding claims, **characterized by** switching means (SW) for connection of at least one of said telecommunications network connections (a/b1, a/b2) with said terminal port (SLI1, SLI2, SLI3).

12. Apparatus according to claim 11, **characterized in that** said switching means comprise a switching matrix (SW) and **in that** a line switching unit (SW1) for connecting the two telecommunications network connections (a/b1, a/b2) forms part of the switching matrix (SW).

13. Apparatus according to any of claims 11 or 12, **characterized in that** said terminal port (SLI1, SLI2, SLI3) is simultaneously connectable to both of said telecommunications network connections (a/b1, a/b2) via said switching means.

14. Apparatus according to any of the preceding claims, **characterized by** at least two signal coding, i.e. decoding filters (SICOFI1, SICOFI2), respectively having an impedance filter for varying their input impedance.

15. Apparatus according to claim 14, **characterized in that** said line switching unit (SW1) interconnects the digital inputs/outputs of the two signal coding, i.e. decoding filters (SICOFI1, SICOFI2).

## Revendications

1. Dispositif de télécommunication comprenant au moins deux connexions à un réseau de télécommunication (a/b1, a/b2) afin de connecter deux unités de raccordement d'abonnés (TAE1, TAE2) analogiques pouvant être reliées à au moins une installation de commutation (GSW) par le biais d'un réseau de communication (GSTN), les connexions à un réseau de télécommunication (a/b1, a/b2) ayant chacune une impédance d'entrée réglable et étant reliées à au moins une connexion de terminal (SLI1, SLI2, SLI3) en vue de la connexion d'au moins un terminal de télécommunication (TEL, ANB, FAX), **caractérisé par** un dispositif de commande (SI) servant à
- émettre des signaux de mesure au niveau de l'une des connexions à un réseau de télécommunication (a/b1, a/b2),
- recevoir ces signaux de mesure par le biais de l'autre connexion à un réseau de télécommunication (a/b1, a/b2) lors de la liaison des deux connexions à un réseau de télécommunication (a/b1, a/b2) par le biais du réseau de communication (GSTN),
- déterminer des paramètres de transmission de la liaison physique établie par le biais des unités de raccordement d'abonnés (TAE1, TAE2) et du réseau de communication (GSTN) sur la base des signaux de mesure émis et reçus, et
- faire varier l'impédance d'entrée d'au moins une des connexions à un réseau de télécommunication (a/b1, a/b2).

2. Dispositif selon la revendication 1, **caractérisé en ce que** le paramètre de transmission à déterminer est l'atténuation en fonction de -la fréquence.

3. Dispositif selon la revendication 1, **caractérisé en ce que** le paramètre de transmission à déterminer est l'atténuation d'écoute.

4. Dispositif selon l'une des revendications précédentes, **caractérisé par** une détermination répétée des paramètres de transmission, à chaque fois après la variation de l'impédance d'entrée.

5. Dispositif selon la revendication 4, **caractérisé par** un dispositif de sélection servant à sélectionner la valeur de l'impédance d'entrée ayant occasionné la réponse fréquentielle la plus linéaire lors de la détermination des paramètres de transmission.

6. Dispositif selon l'une des revendications 1 à 4, **caractérisé par** un dispositif de sélection servant à sélectionner la valeur de l'impédance d'entrée ayant occasionné l'atténuation d'écoute la plus importante lors de la détermination des paramètres de transmission.

7. Dispositif selon l'une des revendications précédentes, **caractérisé par** un dispositif de sélection (DIAL) servant à provoquer l'établissement d'une liaison vers un terminal de communication (KEB) par le biais de la seconde connexion à un réseau de télécommunication (a/b2), un dispositif de transfert (SW1) servant à la retransmission sélective des signaux reçus par la première connexion à un réseau de télécommunication (a/b1) à la seconde connexion à un réseau de télécommunication (a/b2), ainsi qu'à la retransmission sélective des signaux reçus par la seconde connexion à un réseau de télécommunication (a/b2) à la première connexion à un réseau de télécommunication (a/b1), et par un dispositif amplificateur (AMP1, AMP2) servant à amplifier au moins les composantes de signal utile des signaux reçus par la première connexion à un réseau de télécommunication (a/b1) et à amplifier au moins les composantes de signal utile des signaux reçus par la seconde connexion à un réseau de télécommunication (a/b2).

8. Dispositif selon l'une des revendications précédentes, **caractérisé par** un dispositif convertisseur à deux fils/quatre fils (GABEL1, GABEL2) au niveau de chacune des connexions à un réseau de télécommunication (a/b1, a/b2) respectivement.

9. Dispositif selon la revendication 8, **caractérisé par le fait qu'**au moins un des dispositifs convertisseurs à deux fils/quatre fils (GABEL1, GABEL2) a une impédance d'entrée qui peut être réglée par l'intermédiaire d'au moins une grandeur de réglage que le dispositif de commande (SI) peut faire varier.

10. Dispositif selon la revendication 8 ou 9, **caractérisé par le fait qu'**un convertisseur analogique/numérique (ADC) est associé à chaque fois à la sortie des signaux de chaque dispositif convertisseur à deux fils/quatre fils (GABEL1, GABEL2) située du côté des quatre fils, et qu'un convertisseur numérique/analogique (DAC) est associé à chaque fois à l'entrée des signaux de chaque dispositif convertisseur à deux fils/quatre fils (GABEL1, GABEL2) située du côté des quatre fils, et **par le fait qu'**un dispositif de transfert (SW1) est prévu sur le côté des signaux numériques afin d'établir une liaison entre les deux dispositifs convertisseurs à deux fils/quatre fils.

11. Dispositif selon l'une des revendications précédentes, **caractérisé par** un dispositif de commutation (SW) servant à relier au moins une des connexions à un réseau de télécommunication (a/b1, a/b2) à la connexion de terminal (SLI1, SLI2, SLI3).

12. Dispositif selon la revendication 11, **caractérisé en ce que** le dispositif de commutation est une matrice de commutation (SW), et qu'un dispositif de transfert (SW1) servant à relier les deux connexions à un réseau de télécommunication (a/b1, a/b2) fait partie de la matrice de commutation (SW).

13. Dispositif selon l'une des revendications 11 ou 12, **caractérisé en ce que** la connexion de terminal (SLI1, SLI2, SLI3) peut être reliée simultanément aux deux connexions à un réseau de télécommunication (a/b1, a/b2) par le biais du dispositif de commutation.

14. Dispositif selon l'une des revendications précédentes, **caractérisé par** au moins deux filtres codeurs ou décodeurs de signaux (SICOFI1, SICOFI2) avec un filtre d'adaptation d'impédance servant à faire varier leur impédance d'entrée.

15. Dispositif selon la revendication 14, **caractérisé en ce que** le dispositif de transfert (SW1) relie les unes aux autres les entrées/sorties numériques des deux filtres codeurs ou décodeurs de signaux (SICOFI1, SICOFI2).
